# EUROPÄISCHE PATENTANMELDUNG

(11) **EP 4 748 565 A1**
(43) Veröffentlichungstag der Anmeldung: **27.05.2026**
(21) Anmeldenummer: 25215970.2
(22) Anmeldetag: 14.11.2025
(51) Int. Cl.: B32B 7/06, B32B 27/08

(54) **MEHRSCHICHTIGE VERBUNDFOLIE**

(30) Priorität: 22.11.2024 DE 102024211241
(71) Anmelder: Benecke-Kaliko GmbH, 30419 Hannover (DE)
(72) Erfinder: Kneer, Janosch, Dr., 30419 Hannover (DE); Toguem Fokoua, Stéphane, 30419 Hannover (DE); Kegel, Isabell, 30419 Hannover (DE); Benz, Nicolai, 30419 Hannover (DE)
(74) Vertreter: Preusser, Andrea

(57) **Zusammenfassung**

Die Erfindung betrifft eine mehrschichtige Verbundfolie 1 mit wenigstens einer Deckschicht 2 und einer elektrisch leitfähigen Funktionsschicht 4. Die Funktionsschicht 4 ist zumindest stellenweise durch wenigstens eine Trennfolie 8 von wenigstens einer an die Funktionsschicht 4 unmittelbar angrenzenden Schicht der Verbundfolie 1 beabstandet und trennbar.

## Beschreibung

Die Erfindung betrifft eine mehrschichtige Verbundfolie gemäß dem Oberbegriff des Anspruchs 1. Die Erfindung betrifft außerdem ein Bedienelement gemäß Anspruch 9 und Innenverkleidungsteil eines Fahrzeugs gemäß Anspruch 10.

Folien für die Innenverkleidung von Kraftfahrzeugen, für Möbel, Taschen etc., auch als Kunstleder bezeichnet, besitzen oft einen mehrschichtigen Aufbau, sind oft unterschäumt und zeigen auf ihrer Oberseite dreidimensional strukturierte Oberflächen in verschiedensten Formen und Ausführungen. Der mehrschichtige Aufbau besteht in aller Regel aus einer oberen Deck- oder Dekorschicht, die mit der geprägten oder eingeformten Oberfläche versehen ist, und aus einer oder mehreren Unterschichten. Die Deckschicht ist in der Regel mit einer Lackschicht versehen und kann auch eingefärbt werden. Durch entsprechendes Einstellen der Schichten, auch durch angepasste Weichheit oder durch die bereits genannten geschäumten Schichten entsteht eine ansprechende Haptik.

Der zum Beispiel im Bereich der Fahrzeugausrüstungen steigende Bedarf an Komforteinrichtungen führt zu einem ebenso steigenden Bedarf an der Integration von Funktionen in die Oberflächen eines Fahrzeuginnenraums. So richtet sich der Blick neuerdings auf Bezugsmaterialien bzw. flexible Flächenmaterialien mit integrierten Funktions- oder Sensor- oder Signalelementen, insbesondere auch auf die Integration von Beleuchtungen oder Heizfunktionen in die zur Beschichtung oder Verkleidung von Bauteilen verwendeten Folien.

Aus der EP 3085198B1 ist ein elektrisch heizbares Flächenelement für einen Fahrzeugsitz bekannt, bei der auf eine elektrisch nichtleitende Trägerschicht eine elektrisch leitfähige und als Widerstandsheizung ausgebildete Beschichtung aufgebracht wird, die von einer elektrisch leitfähigen Paste gebildet wird, welche auf die Trägerschicht aufgedruckt wird. Zusätzlich muss die elektrisch leitfähige Beschichtung nachträglich mit Leitungen zur Stromversorgung und bzw. oder Datenübertragung oder anderen oberflächen montierten Bauelementen, sogenannten SMD-Bauteilen, kontaktiert werden. Nachteiliger Weise werden die optischen und haptischen Eigenschaften der meist sehr dünnen Verbundmaterialien zur Oberflächenbeschichtung durch die nachträglich Kontaktierung negativ beeinflusst. Zudem ist der Montageaufwand z. B. zur Integration von Sensorik in die Verbundstruktur sehr aufwendig, da Leitungen zur Stromführung an die elektrisch leitfähige Beschichtung herangeführt werden müssen, z. B. durch eine Bohrung im Bauteilträger und der Verbundstruktur.

Die DE 10 2023 201 071 A1 offenbart eine Verbundstruktur mit einer Funktionsschicht, aufweisend eine elektrisch leitfähige Struktur. Zur Kontaktierung der elektrisch leitfähigen Struktur muss diese teilweise aus der Verbundstruktur herausgeführt sein. Die Kontaktierungsstellen sind hierbei vor äußeren Einflüssen ungeschützt und können in Folge von Oxidation oder unter Einfluss von Feuchte oder anderen Umgebungsbedingungen an elektrischer Leitfähigkeit verlieren und die Funktionsfähigkeit negativ beeinflussen.

Für die Erfindung besteht die Aufgabe darin, eine mehrschichtige Verbundfolie mit einer elektrisch leitfähigen Funktionsschicht bereitzustellen, wobei die elektrisch leitfähige Funktionsschicht kontaktierbar ist und gleichzeitig vor chemisch-, physikalischem Einfluss von Umgebungsbedingungen geschützt ist.

Die Lösung dieser Aufgabe ergibt sich durch eine mehrschichtige Verbundfolie mit den Merkmalen des unabhängigen Anspruchs 1.

Weitere vorteilhafte Ausbildungen sind in den abhängigen Ansprüchen offenbart. Eine weitere Lösung der vorliegenden Aufgabe ergibt sich durch ein Bedienelement mit den Merkmalen des Anspruchs 9 und Innenverkleidungsteil eines Fahrzeugs mit den Merkmalen des Anspruchs 10.

Weitere Vorteile und Merkmale sind der allgemeinen Beschreibung sowie den Ausführungsbeispielen zu entnehmen.

Die vorliegende Erfindung betrifft eine mehrschichtige Verbundfolie mit wenigstens einer Deckschicht und einer Funktionsschicht. Die Funktionsschicht ist zumindest stellenweise durch wenigstens eine Trennfolie von wenigstens einer an die Funktionsschicht unmittelbar angrenzenden Schicht der Verbundfolie beabstandet und trennbar.

Die Trennfolie kann einseitig oder beidseitig der Funktionsschicht angeordnet sein. Die Funktionsschicht umfasst ein Substrat und eine auf dem Substrat gedruckte und aushärtend getrocknete elektrisch leitfähige Struktur. Die elektrisch leitfähige Struktur der Funktionsschicht kann lagenweise mit einer Polymerpaste oder einer Tinte in einem Druckverfahren auf dem Substrat aufgebaut sein. Die Polymerpaste kann mit elektrisch leitfähigen Additiven, zum Beispiel aus Kohlenstoff oder Silber, versetzt werden. So können elektrisch leitfähige Strukturen, z. B. in Form von Leiterbahnen, die besonders dünn, dehnfähig und biegeflexibel sind, in einem Druckverfahren erzeugt werden. Die elektrisch leitfähige Struktur kann lokal ausgebildet sein und zur Berührungserkennung dienen. Die elektrisch leitfähige Struktur kann aus einem selbstleitfähigen Polymer (PEDOT:PSS) ausgebildet sein. Das PEDOT:PSS kann außerdem lichtdurchlässig ausgebildet sein. Durch Trocknung z.B. in einem Ofen erstarrt das pastöse Material und härtet aus, wodurch eine formstabile Lage oder Struktur erhalten bleibt. Auf diese Weise kann durch flächiges Bedrucken auch eine elektrisch heizbare Lage erzeugt werden. Es zeigt sich als vorteilhaft, dass die Funktionsschicht bzw. die einzelnen Lagen der Funktionsschicht auf diese Weise besonders dünn und flexibel ausgebildet sein können. Die Pasten können durch geeignete Druckverfahren, wie z.B. Siebdruck, auf ein Substrat bzw. die Trägerschicht aufgebracht werden. Die Schichtstärke der getrockneten Paste liegt vorzugsweise im Bereich 50 nm - 30 µm.

Vorzugsweise ist die Trennfolie hierzu an einem Randbereich der Verbundfolie angeordnet, sodass die Schichten an dem Randbereich der Verbundfolie vergleichbar mit dem Aufschlagen der Seiten eines Buches voneinander getrennt werden können. Dadurch, dass die Trennfolie die Funktionsschicht zumindest teilweise von der benachbarten Schicht trennt, ist die Funktionsschicht bzw. die elektrisch leitfähige Struktur in diesem Bereich auch nach Herstellung der Verbundfolie wie beschrieben zugängig und beispielsweise mit einer Spannungsversorgung oder einer Auswerteeinrichtung elektrisch kontaktierbar. Die Kontaktierung der elektrisch leitfähigen Struktur kann beispielsweise unmittelbar durch Kontaktierung der elektrisch leitfähigen Struktur von der mit der elektrisch leitfähigen Struktur bedruckten Seite des Substrats erfolgen oder alternativ auch von der Rückseite des Substrats, indem das Substrat von der unbedruckten Seite in Richtung der mit der elektrisch leitfähigen Struktur bedruckten Seite des Substrats durch ein Kontaktierungselement durchdrungen wird. So kann das Kontaktierungselement, welches beispielsweise durch einen Draht gebildet sein kann, die elektrisch leitfähige Struktur kontaktieren, auch wenn die Trennfolie das Substrat der Funktionsschicht auf der unbedruckten Seite von der auf dieser Seite unmittelbar angrenzenden Schicht der Verbundfolie trennt. Die Trennfolie kann nach Herstellung der Verbundfolie wahlweise in der Verbundfolie verbleiben oder vollständig entnommen werden.

Hierdurch ist auf vorteilhafte Weise ein Herausführen der Funktionsschicht aus der Verbundfolie zur elektrischen Kontaktierung nicht erforderlich. Gleichzeitig ist die Funktionsschicht durch die umliegenden Schichten der Verbundstruktur weiterhin vor dem chemisch-, physikalischem Einfluss von Umgebungsbedingungen geschützt.

Gemäß einem weiteren Aspekt der vorliegenden Erfindung weist die Trennfolie einen im Vergleich zu den zumindest an die Trennfolie unmittelbar angrenzenden Schichten der Verbundfolie einen höheren Erweichungs- und bzw. oder Schmelzpunkt auf. Die Trennfolie ist aus einem Material ausgebildet, dessen Erweichungs- bzw. Schmelzpunkt beispielsweise über dem Erweichungs- bzw. Schmelzpunkt der Funktionsschicht und bzw. oder der Deckschicht und bzw. oder ggfs. einer weiteren an die Trennfolie angrenzenden Schicht liegt. Hierdurch kann auf wirksame Weise vermieden werden, dass die durch die Trennfolie beabstandeten Schichten z.B. bei in einem Thermoformprozess zur Herstellung der Verbundfolie eine stoffschlüssige Verbindung mit der Trennfolie sowie untereinander eingehen. Mit anderen Worten sind die Schichten in dem Bereich, in dem die Trennfolie die Schichten voneinander trennt, auch nach Herstellung der einzelnen Schichten zu einer Verbundfolie nicht miteinander verbunden und können voneinander separiert werden.

Gemäß einem weiteren Aspekt der vorliegenden Erfindung weist die Verbundfolie eine Trägerschicht zur Erhöhung der Steifigkeit der Verbundfolie auf. Die Deckschicht und die Trägerschicht können einzeln oder gemeinsam jeweils unmittelbar angrenzend an die Funktionsschicht angeordnet sein. Vorzugsweise ist zumindest die Trägerschicht an die Funktionsschicht unmittelbar angrenzend angeordnet.

Gemäß einem weiteren Aspekt der vorliegenden Erfindung ist die Trennfolie aus Polyimid ausgebildet. Polyimid ist auf vorteilhafte Weise hochschmelzend und kann auch bei hohen Prozesstemperaturen während der Herstellung der Verbundfolie wirksam verhindern, dass eine stoffschlüssige Verbindung zwischen der Trennfolie und den angrenzenden Schichten erfolgt.

Gemäß einem weiteren Aspekt der vorliegenden Erfindung ist rückseitig der Deckschicht eine Maskierungsschicht mit wenigstens einem lichtdurchlässigen Bereich und wenigstens einem lichtundurchlässigen Bereich angeordnet. Die Maskierungsschicht kann durch rückseitiges Bedrucken der Deckschicht mit einer opaken Tinte gebildet werden, wobei die Deckschicht im Bereich der lichtdurchlässigen Bereiche nicht bedruckt ist oder mit einem transparenten oder transluzenten Material gefüllt ist. Auf eine solche Weise lassen sich beispielsweise Symbole, Buchstaben oder Zahlen auf der Oberfläche der Verbundfolie abbilden, deren Sichtbarkeit bei Hinterleuchten der Folie überhaupt erst in Erscheinung tritt oder sich durch Hinterleuchten zumindest verstärken lässt.

Gemäß einem weiteren Aspekt der vorliegenden Erfindung bildet die Funktionsschicht einen Berührungssensor. Die Funktionsschicht kann als ein mehrlagiger Aufbau aus dem Substrat mit darauf applizierten elektrisch leitfähigen Lagen und elektrisch nicht leitfähigen Lagen ausgebildet sein und zum Beispiel einen kapazitiven Berührungs- oder Näherungssensor bilden. Die Verbundfolie kann so beispielsweise bei Verwendung in einem Display oder als Beschichtungsmaterial für eine Oberfläche im Innenraum eines Fahrzeugs zur Steuerung von Fahrzeugfunktionen verwendet werden, indem bei Annäherung oder Berührung der Verbundfolie durch eine Person ein technischer Befehl zur Steuerung von Funktionen in einem Fahrzeug ausgelöst werden kann.

Gemäß einem weiteren Aspekt der vorliegenden Erfindung weist die Trägerschicht eine Schichtdicke zwischen 1 mm bis 3 mm auf. Die Trägerschicht kann aus einem beliebigen thermoplastischen Kunststoff ausgebildet sein, wobei diese vorzugsweise aus Polymethylmethacrylat (PMMA), Polyethylenterephthalat (PET), Polyethylenterephthalat modifiziert mit Glykol (PETG) oder Polycarbonat (PC) besteht. Ein thermoplastischer Kunststoff in einem Schichtdickenbereich zwischen 1 mm bis 3 mm bietet einen guten Kompromiss zwischen einem kompakten, stabilen Aufbau, einer guten thermischen Verformbarkeit sowie einem geringen Gewicht der Verbundfolie insgesamt.

Gemäß einem weiteren Aspekt der vorliegenden Erfindung ist die Verbundfolie lichtdurchlässig. Für einen insgesamt lichtdurchlässigen Verbund können die einzelnen Schichten der Verbundfolie vollständig lichtdurchlässig, d.h. transparent oder teilweise lichtdurchlässig, d.h. transluzent sein. Die insgesamt lichtdurchlässige Verbundfolie kann einen mehrschichtigen Aufbau aus einer Kombination von transluzenten, transparenten und bzw. oder teilweise opaken Schichten aufweisen. Die Lichtdurchlässigkeit bezieht sich auf einen Wellenlängenbereich elektromagnetischer Wellen für sichtbares Licht zwischen 380 nm und 780 nm. Die Deckschicht kann beispielsweise aus einem thermoplastischen Polyolefin (TPO) ausgebildet sein und bzw. oder eine zusätzliche Lackschicht zur Anpassung der optischen Eigenschaften und zur Verbesserung der Abriebbeständigkeit aufweisen.

Die Verbundstruktur kann in einem Thermoformprozess verarbeitbar sein.

Die vorliegende Erfindung betrifft außerdem ein Bedienelement, vorzugsweise ein Display, mit einer erfindungsgemäßen Verbundfolie oder gemäß eines weiteren Aspekts der Erfindung ein Innenverkleidungsteil eines Fahrzeugs mit einer erfindungsgemäßen Verbundfolie. Das Innenverkleidungsteil kann beispielsweise eine Türtafel, eine Konsole, ein Dachhimmel oder ein Armaturenträger für den Fahrzeuginnenraum sein. Das Innenverkleidungsteil weist einen Träger auf, auf dessen Außenseite die erfindungsgemäße Verbundfolie angeordnet ist.

Ausführungsbeispiele und weitere Vorteile der Erfindung werden nachstehend in Zusammenhang mit den folgenden Figuren schematisch dargestellt und näher erläutert. Darin zeigt:
Fig. 1 eine schematische Darstellung einer erfindungsgemäßen mehrschichtigen Verbundfolie gemäß eines ersten Ausführungsbeispiels.
Fig. 2 zeigt eine schematische Darstellung einer erfindungsgemäßen mehrschichtigen Verbundfolie gemäß eines zweiten Ausführungsbeispiels, bei dem die Funktionsschicht von einer Trennfolie gelöst ist.

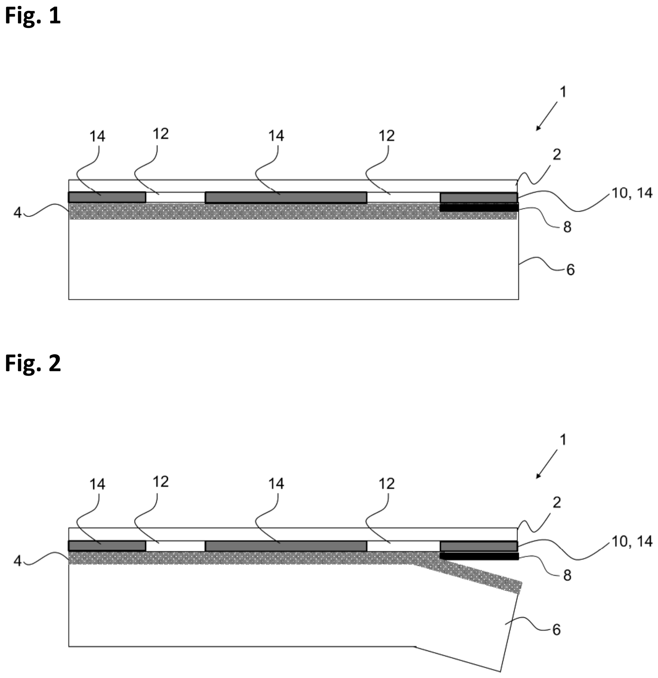

Figur 1 zeigt eine lichtdurchlässige mehrschichtige Verbundfolie 1, wobei die Verbundfolie 1 eine transluzente Deckschicht 2 und eine rückseitig der Deckschicht 2 angeordnete Maskierungsschicht 10 aufweist. Die Maskierungsschicht 10 weist lichtundurchlässige Bereiche 14 und zwischen den lichtundurchlässigen Bereichen 14 angeordnete lichtdurchlässige Bereiche 12 auf. Rückseitig der Maskierungsschicht 10 ist eine Funktionsschicht 4 unmittelbar angrenzend an eine transparente Trägerschicht 6 angeordnet. Zwischen der Funktionsschicht 4 und der Maskierungsschicht 10 ist bereichsweise am äußeren Rand der Verbundfolie 1 eine Trennfolie 8 angeordnet.

Figur 2 zeigt die mehrschichtige Verbundfolie 1 aus Figur 1, wobei die Funktionsschicht 4 von der Trennfolie 8 gelöst ist, sodass die Funktionsschicht 4 in dem von der Trennfolie 8 losgelösten Bereich elektrisch kontaktierbar ist. In dem übrigen Bereich steht die Funktionsschicht 4 in einer fest gefügten Verbindung mit der Maskierungsschicht 10 und der Trägerschicht 6.

### Bezugszeichenliste (Teil der Beschreibung)

- 1: Verbundfolie
- 2: Deckschicht
- 4: Funktionsschicht
- 6: Trägerschicht
- 8: Trennfolie
- 10: Maskierungsschicht
- 12: Lichtdurchlässiger Bereich
- 14: Lichtundurchlässiger Bereich

## Patentansprüche

1. Mehrschichtige Verbundfolie (1) mit wenigstens einer Deckschicht (2) und einer elektrisch leitfähigen Funktionsschicht (4),
**dadurch gekennzeichnet, dass**
die Funktionsschicht (4) zumindest stellenweise durch wenigstens eine Trennfolie (8) von wenigstens einer an die Funktionsschicht (4) unmittelbar angrenzenden Schicht der Verbundfolie (1) beabstandet und trennbar ist.

2. Verbundfolie (1) nach Anspruch 1,
**dadurch gekennzeichnet, dass**
die Trennfolie (8) im Vergleich zu den zumindest an die Trennfolie (8) unmittelbar angrenzenden Schichten der Verbundfolie (1) einen höheren Erweichungs- und/oder Schmelzpunkt aufweist.

3. Verbundfolie (1) nach einem der Ansprüche 1 oder 2,
**dadurch gekennzeichnet, dass**
die Verbundfolie (1) eine Trägerschicht (6) zur Erhöhung der Steifigkeit der Verbundfolie (1) aufweist.

4. Verbundfolie (1) nach einem der Ansprüche 1 bis 3,
**dadurch gekennzeichnet, dass**
die Trennfolie (8) aus Polyimid ausgebildet ist.

5. Verbundfolie (1) nach einem der Ansprüche 1 bis 4,
**dadurch gekennzeichnet, dass**
rückseitig der Deckschicht (2) eine Maskierungsschicht (10) mit wenigstens einem lichtdurchlässigen Bereich (12) und wenigstens einem lichtundurchlässigen Bereich (14) angeordnet ist.

6. Verbundfolie (1) nach einem der Ansprüche 1 bis 5,
**dadurch gekennzeichnet, dass**
die Funktionsschicht (4) einen Berührungssensor bildet.

7. Verbundfolie (1) nach einem der Ansprüche 1 bis 6,
**dadurch gekennzeichnet, dass**
die Trägerschicht (6) eine Schichtdicke zwischen 1 mm bis 3 mm aufweist.

8. Verbundfolie (1) nach einem der Ansprüche 1 bis 7,
**dadurch gekennzeichnet, dass**
die Verbundfolie (1) lichtdurchlässig ist.

9. Bedienelement, vorzugsweise Display, mit einer Verbundfolie (1) nach einem der Ansprüche 1 bis 8.

10. Innenverkleidungsteil eines Fahrzeugs mit einer Verbundfolie (1) nach einem der Ansprüche 1 bis 8.
